## Europäisches Patentamt

## European Patent Office

## Office européen des brevets

(19)

(11) Veröffentlichungsnummer: **0 248 225**
**B1**

(12)

# EUROPÄISCHE PATENTSCHRIFT

(45) Veröffentlichungstag der Patentschrift:
**18.10.89**

(51) Int. Cl.⁴: **B 65 B 53/00,** B 65 B 61/18,
B 29 B 13/02, B 29 C 55/06

(21) Anmeldenummer: **87106606.4**

(22) Anmeldetag: **07.05.87**

(54) Verfahren und Vorrichtung zum Einhüllen von Zigarettenpäckchen in Klarsichtfolie.

(30) Priorität: **04.06.86 DE 3618736**

(43) Veröffentlichungstag der Anmeldung:
**09.12.87 Patentblatt 87/50**

(45) Bekanntmachung des Hinweises auf die Patenterteilung:
**18.10.89 Patentblatt 89/42**

(84) Benannte Vertragsstaaten:
**BE DE FR GB IT NL SE**

(56) Entgegenhaltungen:
**EP-A- 0 067 332**
**FR-A- 2 204 180**
**GB-A- 771 842**
**US-A- 4 134 957**

(73) Patentinhaber: **Maschinenfabrik Alfred Schmermund GmbH & Co., Brüggerfelder Strasse 16-18,
D-5820 Gevelsberg (DE)**

(72) Erfinder: **Demny, Helmut, Grosser Markt 11,
D-5820 Gevelsberg (DE)**

(74) Vertreter: **Dipl.-Ing. H. Marsch Dipl.-Ing. K. Sparing Dipl.-Phys.Dr. W.H. Röhl Patentanwälte,
Rethelstrasse 123, D-4000 Düsseldorf 1 (DE)**

## Beschreibung

Die Erfindung betrifft ein Verfahren zum Einhüllen von Zigarettenpäckchen in Klarsichtfolie, wobei die Klarsichtfolie, nachdem sie gegebenenfalls mit einem Aufreissbändchen versehen wurde, um das Zigarettenpäckchen gelegt, gefaltet und geschweisst wird, sowie eine Vorrichtung zum Einhüllen von Zigarettenpäckchen in Klarsichtfolie mit einer Zuführeinrichtung für die Klarsichtfolie gegebenenfalls zusammen mit einem Aufreissbändchen, zu einer Einrichtung zum Herumlegen, Falten und Schweissen der Klarsichtfolie um das Zigarettenpäckchen, wobei die Zuführeinrichtung Mittel zum Straffhalten der Klarsichtfolie aufweist.

Beim Einhüllen von Zigarettenpäckchen in Klarsichtfolie, allgemein „Cellophanieren" genannt, muss die Klarsichtfolie möglichst stramm um das Zigarettenpäckchen gelegt, gefaltet und geschweisst werden, um ein gutes Aussehen zu erzielen. Ein Strammziehen der Klarsichtfolie ist jedoch nur bis zu einem bestimmten Grad möglich, wobei hinzukommt, dass bei höheren Arbeitsgeschwindigkeiten, wie sie für das Verpacken von Zigaretten angestrebt werden, ein regelrechtes Strammziehen der Klarsichtfolie nicht mehr möglich ist, so dass eine Erhöhung der Arbeitsgeschwindigkeit zu einem unbefriedigenden Aussehen der fertigen mit Klarsichtfolie eingehüllten Zigarettenpackungen führt.

Aufgabe der Erfindung ist es daher, ein Verfahren und eine Vorrichtung der eingangs genannten Arten zu schaffen, die es ermöglichen, auch bei hohen Arbeitsgeschwindigkeiten ein einwandfreies Einhüllen der Zigarettenpäckchen zu erzielen.

Gegenstand der Erfindung ist daher ein Verfahren der eingangs genannten Art, bei dem die Aufgabe dadurch gelöst wird, dass die Klarsichtfolie vor dem Wickeln um das Zigarettenpäckchen durch Erwärmung auf der gesamten Breite gedehnt wird. Nach dem Herumlegen der Klarsichtfolie um das Zigarettenpäckchen und dem Falten und Schweissen derselben kühlt sich die Klarsichtfolienumhüllung wieder ab und legt sich dadurch straff um das Zigarettenpäckchen, wie es auch der Fall wäre, wenn die Folie stramm um das Zigarettenpäckchen gezogen würde. Eine Beeinträchtigung der Molekülstruktur der Klarsichtfolie erfolgt hierbei nicht, sondern nur eine Wärmedehnung.

Gegenstand der Erfindung ist weiter eine Vorrichtung der eingangs genannten Art zur Durchführung des Verfahrens, bei der die Aufgabe dadurch gelöst wird, dass im Bereich der Zuführeinrichtung eine Einrichtung zum Erwärmen der Klarsichtfolie vorgesehen ist.

Weitere Ausgestaltungen der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.

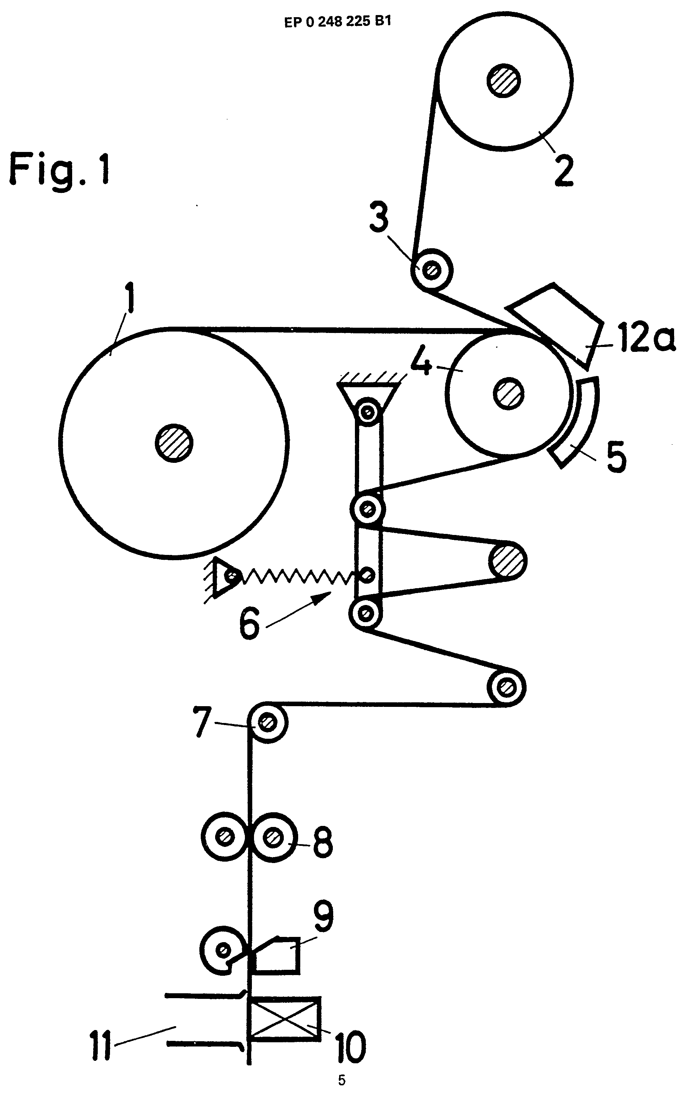

Fig. 1 bis 3 zeigen schematisch eine Zuführeinrichtung einer Vorrichtung zum Einhüllen von Zigarettenpäckchen mit unterschiedlichen Ausführungsformen einer Erwärmungseinrichtung.

Vorrichtungen zum Einhüllen von Zigarettenpäckchen mit Klarsichtfolie sind bekannt, vgl. beispielsweise DE-OS 35 15 655 oder DE-OS 26 08 934.

Eine Klarsichtfolienbahn befindet sich auf einer Bobine 1, während eine Bobine 2 eine Aufreissbändchenbahn beinhaltet. Die Klarsichtfolienbahn wird einer Trommel 4 zugeführt, der gleichzeitig auch die Aufreissbändchenbahn über eine Rolle 3 derart zugeführt wird, dass sich die Aufreissbändchenbahn auf die Klarsichtfolienbahn legt. Die beiden Bahnen werden mit Hilfe eines Heizelements 5 miteinander verbunden, wobei das Heizelement 5 benachbart zum Umfang der Trommel 4 in einem Bereich angeordnet ist, in dem die Aufreissbändchenbahn in Eingriff mit der Klarsichtfolienbahn vorüberläuft. Die auf diese Weise gebildete Packstoffbahn wird über ein federnd vorgespanntes Pendel 6 straff gehalten und über Rollen 7 einem intermittierend angetriebenen Rollenpaar 8 zugeführt, von wo aus die Packstoffbahn einer Messerstation 9 zugeführt wird, in der jeweils ein Blatt von vorbestimmter Länge von der Packstoffbahn abgetrennt wird. Dieses Blatt befindet sich hierbei zwischen einem Zigarettenpäckchen 10 und einem Mundstück 11, wobei das Zigarettenpäckchen 10 das abgetrennte Blatt durch das Mundstück 11 schieb, auf welche Weise die erste U-förmige Umhüllung gebildet wird. Diese Umhüllung wird nachfolgend weiter um das Zigarettenpäckchen 10 gefaltet und geschweisst, welche Vorgänge in bekannter Weise erfolgen, wie sie beispielsweise in den oben genannten Schriften beschrieben sind.

Gemäss Fig. 1 ist ein Infrarotstrahler 12a vorgesehen, der sich beispielsweise benachbart zu der Trommel 4 befinden kann und zur Erwärmung der Klarsichtfolienbahn und der Aufreissbändchenbahn auf der Trommel 4 dient. Durch diese Erwärmung werden diese Bahnen gedehnt, wobei das Straffhalten der Packstoffbahn durch das Pendel 6 sichergestellt wird. Die so gedehnte Packstoffbahn gelangt daher zwischen das Zigarettenpäckchen 10 und das Mundstück 11 und wird in gedehntem Zustand um das Zigarettenpäckchen herumgelegt. Das spätere Abkühlen der gebildeten Umhüllung des Zigarettenpäckchens bewirkt, dass sich die Umhüllung straff um das Zigarettenpäckchen herumlegt. Der Infrarotstrahler 12a wird entsprechend der Machinendrehzahl und damit entsprechend der Vorschubgeschwindigkeit der Klarsichtfolie in der Zuführeinrichtung geregelt, damit eine gleichmässige Erwärmung der Bahnen auf etwa 50 bis 70° C, insbesondere etwa 60° C, vorgenommen wird. Die durch die Erwärmung vorgenommene Dehnung liegt vorzugsweise etwa im Bereich von 0,2 bis 0,5%. Eine wesentliche Abkühlung bis zur Beendingung der Umhüllung des Zigarettenpäckchens 10 ist aufgrund der hohen Verpackungsgeschwindigkeit (bei 500 Päckchen pro Minute 3/25 sec pro Päckchen) nicht zu befürchten.

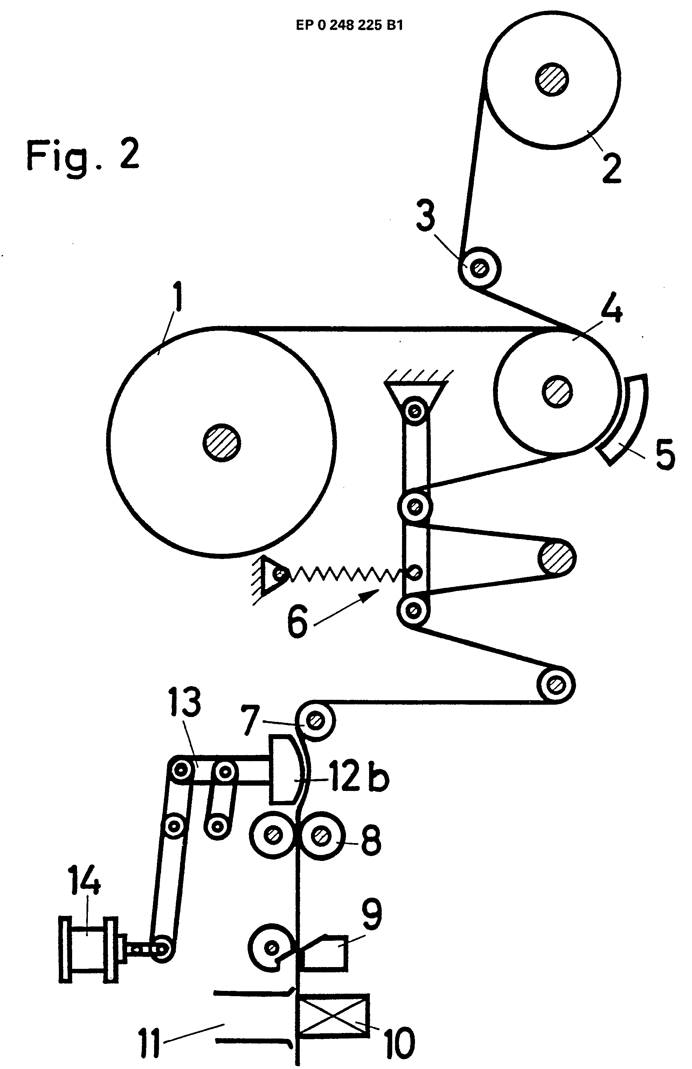

Gemäss Fig. 2 ist ein Heizkörper 12b zwischen der letzten Rolle 7 und dem Rollenpaar 8 vorgesehen, wobei der Heizkörper 12b über Hebel 13 mittels eines Pneumatik- oder Magnetzylinders 14 ablüftbar ist, so dass die Packstoffbahn bei Maschinenstillstand nicht verbrennt oder beschädigt wird. Auch hier erfolgt das Straffhalten über das Pendel 6.

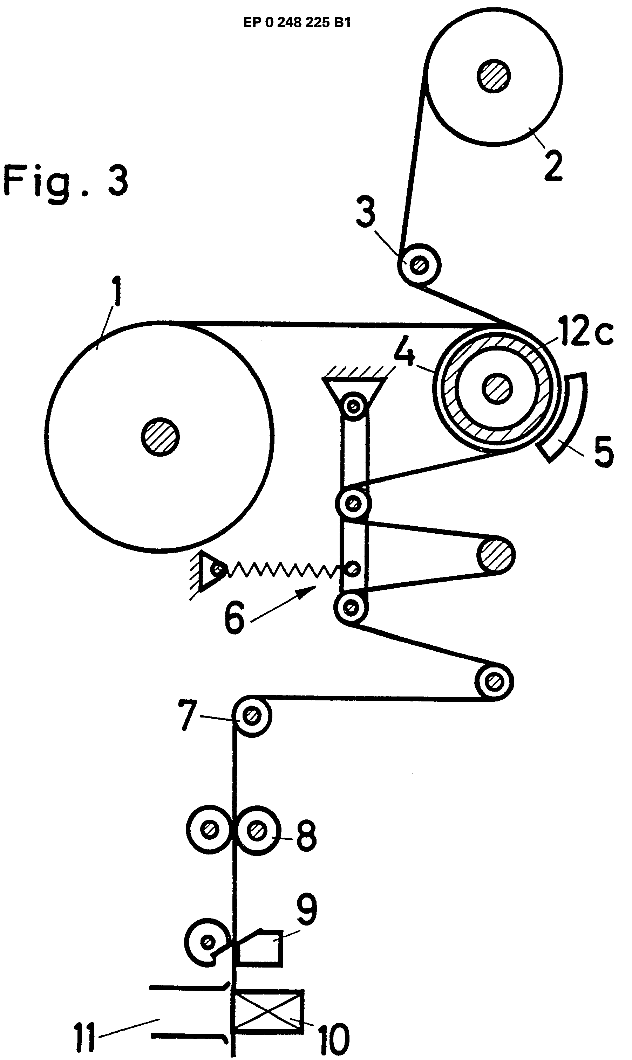

Gemäss Fig. 3 besitzt die Trommel 4 eine innere Beheizung 12c, so dass die Klarsichtfolienbahn und die Aufreissbändchenbahn über die beheizte Trommel 4 entsprechend erwärmt und damit gedehnt werden. Bei Verwendung von Wachs als Klebmittel zwischen Klarsichtfolienbahn und Aufreissbändchenbahn besitzt dies im übrigen den Vorteil, dass dann auf das Heizelement 5 verzichtet werden kann.

## Patentansprüche

1. Verfahren zum Einhüllen von Zigarettenpäckchen in Klarsichtfolie, wobei die Klarsichtfolie, nachdem sie gegebenenfalls mit einem Aufreissbändchen versehen wurde, um das Zigarettenpäckchen gelegt, gefaltet und geschweisst wird, dadurch gekennzeichnet, dass die Klarsichtfolie vor dem Wickeln um das Zigarettenpäckchen durch Erwärmung auf ihrer gesamten Breite gedehnt wird, so dass das spätere Abkühlen der gebildeten Umhüllung des Zigarettenpäckchens bewirkt, dass sich die Umhüllung straff um das Zigarettenpäckchen herumlegt.

2. Verfahren nach Anspruch 1, dadurch gekennzeichnet, dass eine Erwärmung auf etwa 50 bis 70° C, insbesondere etwa 60° C, vorgenommen wird.

3. Verfahren nach Anspruch 1 oder 2, dadurch gekennzeichnet, dass die Erwärmung über eine beheizte Trommel erfolgt, die gleichzeitig zum Verbinden von Klarsichtfolienbahn und Aufreissbändchenbahn mit Wachs als Klebmittel verwendet wird.

4. Vorrichtung zum Einhüllen von Zigarettenpäckchen in Klarsichtfolie mit einer Zuführeinrichtung für die Klarsichtfolie gegebenenfalls zusammen mit einem Aufreissbändchen, zu einer Einrichtung zum Herumlegen, Falten und Schweissen der Klarsichtfolie um das Zigarettenpäckchen, wobei die Zuführeinrichtung Mittel zum Straffhalten der Klarsichtfolie aufweist, zur Durchführung des Verfahrens nach einem der Ansprüche 1 bis 3, dadurch gekennzeichnet, dass im Bereich der Zuführeinrichtung eine Einrichtung (12a, 12b, 12c) zum Erwärmen der Klarsichtfolie vorgesehen ist.

5. Vorrichtung nach Anspruch 4, dadurch gekennzeichnet, dass als Einrichtung zum Erwärmen ein Infrarotstrahler (12a) vorgesehen ist, der entsprechend der Vorschubgeschwindigkeit der Klarsichtfolie in der Zuführeinrichtung geregelt ist.

6. Vorrichtung nach Anspruch 4, dadurch gekennzeichnet, dass als Einrichtung zum Erwärmen ein Heizkörper (12b) vorgesehen ist, der mit einer Ablüfteinrichtung (13, 14) verbunden ist, die bei Stillstand des Klarsichtfolientransports betätigbar ist.

7. Vorrichtung nach Anspruch 6, dadurch gekennzeichnet, dass die Ablüfteinrichtung aus Hebeln (13) und einem steuerbaren Zylinder (14) besteht.

8. Vorrichtung nach Anspruch 4, dadurch gekennzeichnet, dass als Einrichtung zum Erwärmen eine beheizbare Trommel (4, 12c) vorgesehen ist, auf der eine Klarsichtfolienbahn und eine Aufreissbändchenbahn zusammengeführt werden.

## Claims

1. A method of wrapping cigarette packets in transparent film which, after being provided with a tear-strip if required, is placed around the cigarette packet, and welded, characterised in that before being wrapped around the cigarette packet the transparent film is expanded by heating over its entire width so that subsequent cooling of the resulting cigarette packet wrapping causes the wrapping to fit tautly around the cigarette packet.

2. A method according to claim 1, characterised in that heating is effected to about 50 to 70° C, more particularly about 60° C.

3. A method according to claim 1 or 2, characterised in that heating is by means of a heated drum which is also used to connect the web of transparent film and the web of tear-strips with wax as an adhesive.

4. Apparatus for wrapping cigarette packets in transparent film comprising a means for feeding the transparent film, together with a tear-strip if required, to a means for wrapping, folding and welding the transparent film around the cigarette packet, the feel means comprising means for keeping the transparent film taut, for performing the method according to any one of claims 1 to 3, characterised in that a means (12a, 12b, 12c) for heating the transparent film is provided in the region of the feed means.

5. Apparatus according to claim 4, characterised in that the heating means is an infrared radiator (12a) controlled in accordance with the speed of movement of the transparent film in the feed means.

6. Apparatus according to claim 4, characterised in that the heating means is a heater (12b) connected to a release means (13, 14) adapted to be actuated on stoppage of the transparent film transport.

7. Apparatus according to claim 6, characterised in that the release means comprises levers (13) and a controllable cylinder (14).

8. Apparatus according to claim 4, characterised in that the heating means is a heatable drum (4, 12c) on which a transparent film web and a tear-strip web are combined.

## Revendications

1. Procédé pour envelopper des paquets de cigarettes dans une feuille transparente, dans lequel la feuille transparente, après avoir été éventuellement pourvue d'un ruban de déchirage, est posée sur le paquet de cigarette, pliée et soudée, caractérisé par le fait qu'avant d'être enroulée sur le paquet de cigarettes, la feuille transparente est dilatée par échauffement sur toute sa largeur, de manière que le refroidissement subséquent de l'enveloppe de paquet de cigarettes ainsi formée ait pour effet que l'enveloppe se tende tout autour du paquet de cigarettes.

2. Procédé selon la revendication 1, caractérisé par le fait qu'on réalise un échauffement à 50-70° C, et plus particulièrement à 60° C environ.

3. Procédé selon la revendication 1 ou 2, caractérisé par le fait que l'échauffement se fait sur un tambour chauffé, utilisé simultanément pour l'union de la bande de feuille transparente et de la bande de ruban de déchirage au moyen de cire servant d'adhésif.

4. Dispositif pour envelopper des paquets de cigarettes à l'aide d'une feuille transparente, comportant un système d'alimentation de la feuille transparente éventuellement avec ruban de déchirage, sur un dispositif pour la pose, le pliage et le soudage de la feuille transparente sur le paquet de cigarettes, le système d'alimentation présentant des moyens pour tendre la feuille transparente, pour la mise en œuvre du procédé selon l'une des revendications 1 à 3, caractérisé par le fait qu'il est prévu un moyen (12a, 12b, 12c) pour chauffer la feuille transparente au niveau du système d'alimentation.

5. Dispositif selon la revendication 4, caractérisé par le fait que le moyen de chauffage est un radiateur à infrarouge (12a), lequel est réglé en fonction de la vitesse d'avance de la feuille transparente dans le système d'alimentation.

6. Dispositif selon la revendication 4, caractérisé par le fait que le moyen de chauffage est un élément chauffant (12b), lequel est solidaire d'un dispositif de ventilation (13, 14), lequel peut être actionné lorsque cesse la progression de la feuille transparente.

7. Dispositif selon la revendication 6, caractérisé par le fait que le dispositif de ventilation est constitué de leviers (13) et d'un vérin (14) pouvant être commandé.

8. Dispositif selon la revendication 4, caractérisé par le fait que le moyen de chauffage est un tambour pouvant être chauffé (4, 12c) et sur lequel sont amenées conjointement une bande de feuille transparente et une bande de ruban de déchirage.

Fig. 1

# Fig. 2

# Fig . 3